(19) **Europäisches Patentamt**
**European Patent Office**
**Office européen des brevets**

(11) **EP 4 415 069 A1**

(12) # EUROPEAN PATENT APPLICATION

(43) Date of publication:
**14.08.2024 Bulletin 2024/33**

(21) Application number: **23156313.1**

(22) Date of filing: **13.02.2023**

(51) International Patent Classification (IPC):
*H01M 4/134* (2010.01)  *C01G 19/00* (2006.01)
*H01M 4/136* (2010.01)  *H01M 4/38* (2006.01)
*H01M 4/40* (2006.01)  *H01M 4/58* (2010.01)
*H01M 10/052* (2010.01)  *H01M 10/054* (2010.01)
*H01M 10/0562* (2010.01)

(52) Cooperative Patent Classification (CPC):
**H01M 10/0562; C01G 19/006; H01M 4/134;**
**H01M 4/136; H01M 4/38; H01M 4/382;**
**H01M 4/405; H01M 4/582; H01M 10/052;**
**H01M 10/054;** H01M 2300/008

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Karlsruher Institut für Technologie**
**76131 Karlsruhe (DE)**

(72) Inventors:
• **Karkera, Guruprakash**
  **89075 Ulm (DE)**
• **Fichtner, Maximilian**
  **89073 Ulm (DE)**

(74) Representative: **Müller-Boré & Partner**
**Patentanwälte PartG mbB**
**Friedenheimer Brücke 21**
**80639 München (DE)**

(54) **AIR PROCESSABLE SOLID ION CONDUCTOR FOR SECONDARY ALL SOLID-STATE METAL BATTERIES**

(57) The present invention relates to a solid ion conductor for secondary all solid-state metal batteries, comprising a doped perovskite compound of the formula $A_aB_bC_cX_x$, wherein, A is one or more first cation(s) selected from the group consisting of Li, Na, K, Rb, and Cs; B is a second cation selected from the group consisting of Sn, Li, Pb, Sb, and Bi; C is a cation having a smaller radius than the second cation B in terms of ionic radii and is selected from the group consisting of In, Lu, Y, Mn, Fe, and Cu; and X is one or more anion(s) selected from the group consisting of F, Cl, Br, and I; wherein, $1 \leq a \leq 2$, $0.5 \leq b \leq 2$, $0 < c \leq 1$, and $2 \leq x \leq 8$. The invention also relates to a method for manufacturing a solid ion conductor and an all solid-state metal battery.

EP 4 415 069 A1

**Description**

The present invention relates to air processable solid ion conductor materials for secondary all solid-state metal batteries as well as to a method for manufacturing a solid ion conductor and an all solid-state battery. In particular, the present invention relates to a solid ion conductor having high ion conductivity and excellent air stability and processability.

Redox reactions of transition metals are the key players for the charge transfer in lithium ion batteries (LIBs). As new developments are unveiling, the anionic redox component has also been found to be contributing to the overall capacity generated in LIBs. In advanced $Li-O_2$ batteries, lithium iodide/bromide materials are shown to be efficient redox mediators that minimize charging overpotentials.

On the other hand, solid electrolytes (SEs) are a rapidly developing area in LIBs, where increased attention has been obtained by halide containing SEs, which are able to overcome instability issues at metal interphases.

Chloride based $Li_2In_xSc_{0.666-x}Cl_4$ has shown high Li ion conductivity, along with high areal capacity and cyclability when combined with $LiCoO_2/LiNi_{0.85}Co_{0.1}Mn_{0.05}O_2$ cathodes.[1] The incorporation of halide ions enhances the functionality of SEs for lithium metal batteries. Due to their inherently high stability against oxidation (-4.0 V vs. Li+/Li) compared to conventional sulfide-based SEs (-2.5 V), chloride-based SEs have attracted increasing interest. With Cl being more electronegative than S, generally oxidation potentials of chloride-based SEs are much higher than those of sulfide-based SEs. The chemical compatibility of solid electrolytes with both cathode active materials (CAMs) and metallic anodes is another critical aspect in order to obtain longer lifecycle, safer, and high energy all solid-state batteries (ASSBs). In general, chloride-based SEs are found to have better chemical stability with many CAMs.

Recently, $Na/Cl_2$ and $Li/Cl_2$ batteries have been developed which use an $AlCl_3:SOCl_2$-based electrolyte and a carbon-based cathode.[2] However, the exponential growth in the cost of LIB raw materials has increased the scope for realizing batteries beyond lithium systems such as Na ion or multivalent/anion shuttle-based batteries. Anionic batteries solely depend on the charge transfer from the anionic shuttle originating from halide-based electrode materials. In particular, chloride ion batteries (CIBs) attracted increasing interest in recent years due to their high theoretical energy densities and the abundance of chloride materials. Despite of wide range of available chloride materials, their application in batteries is limited due to inherent solubility of metal chlorides in most of applied solvents. Hence, developing chloride-based SEs would benefit CIBs in two ways: firstly, it would overcome the electrode solubility issues and secondly, it would open pathways to employ a wide range of cathode materials.

In the past, several approaches have been developed towards chloride ion cycling both at room temperature (RT) and at elevated temperatures.[3-6] Important properties of chloride ion conducting electrolytes are for instance a high chloride ion conductivity at RT, a low electronic conductivity, a wide voltage window which can be applied to the electrolyte, and stability against reduction and oxidation at the interfaces to both electrodes. Especially promising was the use of $CsSnCl_3$ (CSC), $SnCl_2$, and $PbCl_2$ as solid chloride ion conductors. The cubic perovskite $CsSnCl_3$, which is known as material of photovoltaic cells,[7,8] has shown good chloride ionic conductivity, however, it only exists as a metastable phase at RT.[9] The cubic structure of CSC can be stabilized by thermal treatment after mechanical milling. [10] However, none of the prior art shows comprehensive electrochemical battery cycling. More importantly, the long-term stability of thermally treated CSC is unclear. A stable structured, air tolerant inorganic electrolyte that is capable of shuttling chloride ions at room temperature has not been reported so far. Provision of such material facilitates possible applications in the fields of for instance high energy density batteries for portable electronics, photovoltaic devices, and sensor applications used in e.g., healthcare, automotive industry, or agriculture.

References:

[1] L. Zhou, et al. Nature Energy 2022, 7, 83-93.
[2] G. Zhu et al. Nature 2021, 596, 525-530.
[3] N. Nunotani et al. Am. Ceram. Soc. 2020, 103, 297-303.
[4] F. Gschwind et al. ChemistryOpen 2016, 5, 525-530.
[5] C. Chen et al. Advanced Science 2019, 6, 1802130.
[6] R. Sakamoto et al. ChemElectroChem 2021, 8, 4441-4444.
[7] US 2013/214205 A1
[8] WO 2015/057885 A1
[9] I. V. Murin et al. Russian Journal of Electrochemistry 2009, 45, 411-416.
[10] T. Xia et al. ACS Appl. Mater. Inter. 2020, 12, 18634-18641.

As can be seen, current challenges in employing electrolytes to CIBs are:

(1) to achieve high chloride ion conductivity at RT (herein, RT refers to a temperature of about 20 °C);

(2) to prevent dissolution of chloride electrode materials in the electrolyte; and

(3) to achieve excellent air stability and processability of the chloride ion conductor for rechargeable batteries.

However, to date the prior art fails to provide an electrolyte fulfilling the above requirements due to instability of the chloride-based ion conductor, low chloride ion conductivity, or high solubility of electrode materials.

In view of the above, an object of the present invention is to achieve the above requirements for a chloride ion-conducting electrolyte which are also applicable to other ion-conducting electrolytes, i.e., to achieve high chloride ion conductivity, low solubility of the electrodes, especially chloride-based electrodes, and excellent air stability and processability.

The above technical problem underlying the present invention has been solved by providing the embodiments characterized in the claims.

In particular, the present invention provides a solid ion conductor for secondary all solid-state metal batteries, comprising a crystalline and doped perovskite compound of the formula (I)

$$A_aB_bC_cX_x \text{ ....} \qquad \text{(I)}$$

wherein

A is one or more first cation(s) selected from the group consisting of cations of Li, Na, K, Rb, and Cs;

B is a second cation selected from the group consisting of cations of Sn, Li, Pb, Sb, and Bi;

C is a cation having a smaller radius than the second cation B in terms of ionic radii and is selected from the group consisting of cations of In, Lu, Y, Mn, Fe, and Cu; and X is one or more anion(s) selected from the group consisting of anions of F, Cl, Br, and I;

wherein $1 \leq a \leq 2$, $0.5 \leq b \leq 2$, $0 < c \leq 1$, and $2 \leq x \leq 8$.

That is, in the doped perovskite compound of the formula (I), the B site (second cation B) is partially substituted by another cation C having a smaller radius than B in terms of ionic radii.

Moreover, the present invention provides a method for manufacturing a solid ion conductor and an all solid-state metal battery comprising a solid ion conductor.

As will be described in more detail herein-below, the present invention provides a solid ion conductor (or solid electrolyte) which shows excellent ion conductivity at RT, particularly chloride ion conductivity at RT. Moreover, since said ion conductor is solid, it solves the problem of dissolution of metal chloride-based electrodes in secondary chloride ion batteries. The herein-described solid ion conductor is stable in air having high humidity and maintains its ion-conducting function. In exceptionally high humid environment, the herein-described ion conductor is prone to deactivate due to being converted to an insulating structure. However, the ion-conducting structure, particularly chloride ion-conducting structure can be readily recovered by mild temperature treatment in air.

Generally, a lithium ion battery (LIB) is a type of rechargeable battery composed of cells in which lithium ions move from the negative electrode (anode) through an electrolyte to the positive electrode (cathode) during discharge and back when charging. Li-ion cells use an intercalated lithium compound as the material at the cathode and typically graphite at the anode. A chloride ion battery (CIB) is a type of rechargeable battery composed of cells in which chloride ions move from the positive electrode (cathode) through an electrolyte to the negative electrode (anode) during discharge and back when charging. Typically, the CAM of a CIB is a metal halide, wherein the metal ions are reduced during discharge and oxidized during charging. An all solid-state battery (ASSB) is generally a battery that uses solid electrodes and a solid electrolyte instead of liquid electrolytes. The solid electrolyte employed in such ASSB should show high ion conductivity for the ion moving between the electrodes and may be a polymeric material or an inorganic material, for instance.

The Figures show:

Figure 1 XRD diffractograms of cubic CSC before and after storage for 5 days, of the indium doped CSIC before and after storage for 6 months, and of heat-treated CSC-HT before and after storage for 6 months. For comparison, the ICSD patterns of cubic and monoclinic CSC are also shown.

Figure 2 Nyquist plots of CSC-HT, CSIC, and CSIC-HT and the corresponding chloride ion conductivity obtained by EIS.

**Figure 3** Electrochemical performance of a Li/CSIC/WOCl$_4$ ASSB; a) impedance spectrum (inset: respective equivalent circuit used for the spectra), b) cyclic voltammetry (v = 0.1 mV/s), c) galvanostatic discharge-charge curves, and d) capacity and coulombic efficiency vs. cycle number.

**Figure 4** Air/humidity tolerance and regeneration tests of CSIC-HT; a) XRD patterns before and after exposure to air having RH 50 %, b) corresponding EIS spectra with the respective chloride ionic conductivities, c) XRD patterns before and after exposure to air having RH 95 % and subsequent regeneration by heating, and d) corresponding EIS spectra with the respective chloride ionic conductivities.

**Figure 5** Air/humidity tolerance and regeneration tests of CSIC; a) XRD patterns before and after exposure to air having RH 50 %, b) corresponding EIS spectra with the respective chloride ionic conductivities, c) XRD patterns before and after exposure to air having RH 95 % and subsequent regeneration by heating, and d) corresponding EIS spectra with the respective chloride ionic conductivities.

**Figure 6** Stability of CSIC against different anode metals in an anode/CSIC/VCl$_3$ ASSB: time dependent impedance spectra with a) Li, b) Li-In, c) Mg, and d) Ca anodes at RT.

**Figure 7** Charge transfer capabilities of CSIC with different anode metals in an anode/CSIC/VCl$_3$ ASSB: a) Li (CV between 0.6 and 2.5 V), b) Li-In (CV between 0.0 and 2.0 V), c) Mg (CV between 0.1 and 1.7 V), and d) Ca (CV between 0.1 and 1.7 V) anodes at RT.

**Figure 8** XPS analysis of cycled metals before and after Ar$^+$ sputtering for 5 min; a/e/i) Li 1s, Cl 2p, and Sn 3d spectra of Li anode, b/f/j). Li 1s, Cl 2p, and Sn 3d spectra of Li-In anode, c/g/k) Mg 2p, Cl 2p, and Sn 3d spectra of Mg anode, and d/h/l) Ca 2p, Cl 2p, and Sn 3d spectra of Ca anode.

Hereinafter, the present invention is described with regard to the general crystalline and doped perovskite compound $A_aB_bC_cX_x$ and a specific example thereof, namely $Cs_aSn_bC_cCl_3$ is compared to the undoped compound CSC known from the prior art. However, the described properties and effects apply both to $A_aB_bC_cX_x$ and $Cs_aSn_bC_cCl_3$.

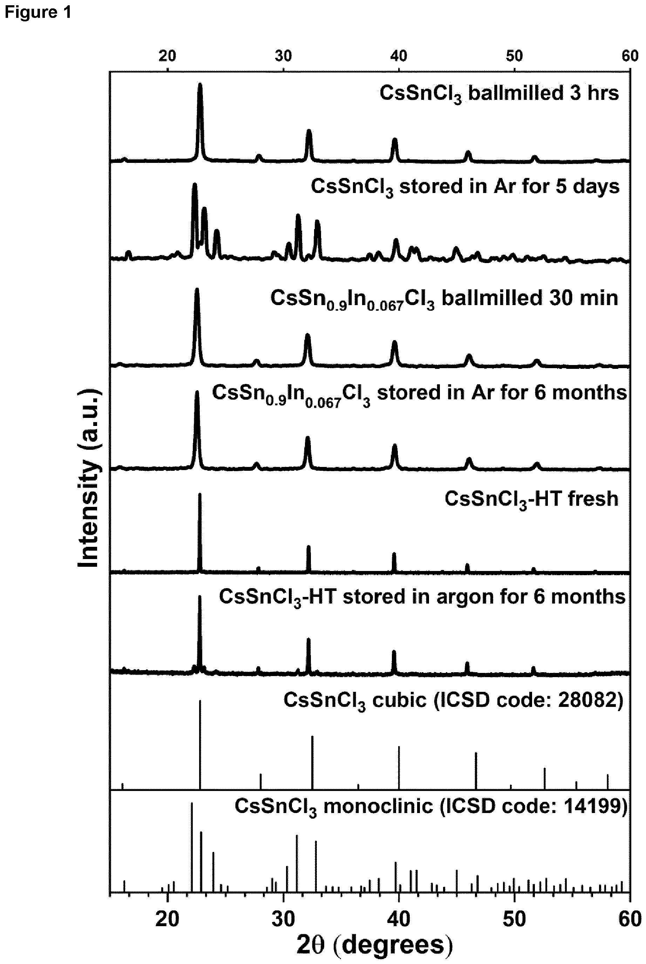

As is known from the prior art, CsSnCl$_3$ (CSC) with a structural formula of ABX$_3$ represents a promising candidate as solid electrolyte for chloride ion batteries. Here A represents Cs$^+$, B represents Sn$^{2+}$, and X represents Cl$^-$ ions. However, CSC exists in two crystalline structures, i.e., in a cubic phase and in a monoclinic phase. The cubic CSC is known to exhibit good chloride ion conductivity ($\sim 10^{-4}$ S/cm at RT), while the monoclinic phase shows a two magnitudes lower chloride ion conductivity ($\sim 10^{-6}$ S/cm at RT). Due to the imbalanced ionic radii of Cs$^+$, Sn$^{2+}$, and Cl$^-$, the cubic CSC is metastable even under inert atmosphere, i.e., it converts to the stable monoclinic phase during resting periods. Said effect is corroborated by significant loss in chloride ion conductivity. The monoclinic phase of CSC can be converted back to its cubic phase by heat treatment at high temperatures. However, even heat-treated cubic CSC remains metastable under inert conditions over extended periods of time. Said effect is shown exemplarily in Figure 1.

In a specific example, according to the present invention, the inventors have found that the cubic phase of CSC can be stabilized by introducing a further cation C into the B site, i.e., the Sn$^{2+}$ position, the other cation C having a smaller ionic radius than the ionic radius of Sn$^{2+}$ yielding a doped perovskite compound of the formula (II),

$$Cs_aSn_bC_cCl_3 \ ...... \qquad (II)$$

In the above formula (II), a, b, and c are as defined above. Preferably, a = 1, $0.8 \leq b < 1$ and $0 < c \leq 0.2$, and more preferably a = 1, $0.9 \leq b < 1$ and $0 < c \leq 0.1$.

The inclusion of an additional cation having a smaller ionic radius than Sn$^{2+}$ in the B site or having a larger ionic radius than Cs$^+$ in the A site of the perovskite results in small distortion of the cubic lattice which causes increased dynamic flexibility of the lattice building blocks, i.e., the Sn/CCl$_6$ octahedra. Said flexibility enables increased chloride diffusion and fast ion conduction through the lattice. Moreover, the inclusion of small cation C stabilizes the cubic phase of CSC due to weakening mechanical constraints which result from an imbalance of the ionic radii of Cs$^+$, Sn$^{2+}$, and Cl$^-$.

Thus, by introducing a small cation C into the structure of CSC, the cubic phase of CSC is stabilized for extended periods of time. The described effect is shown in Figure 1. As can be seen, an exemplary indium doped CSC maintains its cubic phase under argon atmosphere for at least 6 months, while the pristine CSC converts readily to its monoclinic phase within 5 days. The shown doped perovskite even outperforms the heat-treated CSC (CSC-HT) which is known to exhibit better stability compared to pristine CSC.

In view of applicability of the chloride ion conductor, its cubic phase is preferably stable under inert conditions for at least 3 months, more preferably for at least 6 months, and still more preferably for at least 12 months. In this context, "stable" means without converting to a monoclinic phase or remaining substantially in its cubic phase.

In addition to its stability in inert atmosphere, the doped CSC exhibits exceptional stability in air compared to commercially available lithium conducting SEs such as $Li_6PS_5Cl$ (LPSC). Compared to known SEs, $Cs_aSn_bC_cCl_3$ does not decompose under chloride loss if brought into contact with humid air. If brought into contact with air having a RH of 95%, the herein-described doped CSC tend to convert to their monoclinic phase exhibiting a low chloride ion conductivity. However, the deactivated material can be readily regenerated back to its active cubic phase by heat treatment. For instance, the deactivated material may be heated to 100 °C or more for several hours in air or vacuum, preferably to 120 °C to 180 °C, and most preferably to 120 °C to 150 °C, e.g., to 140 °C for 2 to 10 hours, yielding similar chloride ion conductivity as prior to deactivation. Therefore, the doped CSC exhibits excellent air stability and processability enabling storage and production of such material in ambient conditions having a low energy demand. Thus, application of the herein-described materials allows for manufacturing of battery materials without the use of dry room conditions.

Moreover, in view of a broad application spectrum, the cubic phase of the herein described doped perovskite compounds $A_aB_bC_cX_x$ and the specific example $Cs_aSn_bC_cCl_3$ is preferably stable in ambient air having a humidity level of up to 50 % RH for at least 3 hours, more preferably for at least 5 hours, and even more preferably for at least 7 hours.

In the compound $A_aB_bC_cX_x$, b and c values depend on the charge ratio between B and C cations and the dopant amount of cations. Preferably in view of maintaining a cubic perovskite structure similar to $ABX_3$ or $CsSnCl_3$, $0.8 \leq b < 1$ and/or $0.0 < c \leq 0.2$; preferably $0.85 \leq b < 1$ and/or $0.0 < c \leq 0.15$; or even $0.9 \leq b < 1$ and/or $0.0 < c \leq 0.1$.

Further, if the charge of cation C is higher than 2+, inclusion of said cation into the B site of $ABX_3$ results in additional vacancies in the lattice due to charge balancing. Consequently, the resulting vacancies cause even further increased structural flexibility for ionic conduction, and thus exhibit an advantageous effect on chloride diffusion through the lattice. Therefore, introducing cations C having a charge of more than 2+ or creating vacancies in B site is preferred in view of increased chloride ion conductivity and stability of the cubic phase.

In view of the above-described advantages as well as suitable ionic radii and ionic charges for achieving high ionic conductivity, A, B, C, and X are as described hereinafter.

The cation A is selected from the group consisting of cations of Li, Na, K, Rb, Cs, and combinations thereof. Preferably, A is a cation of Cs.

The cation B is selected from the group consisting of cations of Sn, Li, Pb, Sb, and Bi. Preferably, B is selected from the group consisting of cations of Sn, Pb, Sb, and Bi. More preferably, B is a cation of Sn.

The cation C is selected from the group consisting of cations of In, Lu, Y, Mn, Fe, and Cu. Preferably, C is selected from the group consisting of cations of In, Mn, Fe, and Cu. More preferably, C is a cation of In. Moreover, C has a smaller ionic radius than B, which results in vacancies being formed in the B site of the doped perovskite.

The anion X is selected from the group consisting of anions of $Cl^-$, $Br^-$, $F^-$, $I^-$, and combinations thereof. Preferably, the anion X is $Cl^-$.

In the structure with formula (I): $A_aB_bC_cX_x$, $1 \leq a \leq 2$, $0.5 \leq b \leq 2$, $0 < c \leq 1$, and $2 \leq x \leq 8$, e.g., when a = 2, b, c = 1, the structural formula is

$$A_2BCX_6 \dots \qquad (III).$$

Based on the number of cations and corresponding oxidation states involved in the composition and vacancies in the B site, the perovskite structure ($B^{2+}$) can be transformed to a double perovskite ($B^+/C^{3+}$) and to a layered double perovskite ($B^{2+}/C^{3+}$) with ordered vacancies or without. For example, with reference to structural formula (I), some halide perovskite solid ion conducting materials can be represented as $Cs_2Li\text{-}InCl_6$, $Cs_2LiLuCl_6$, $Cs_2LiYCl_6$, $CsSn_{0.9}Mn_{0.1}Cl_3$, $CsSn_{0.9}Fe_{0.1}Cl_3$, $CsSn_{0.9}Cu_{0.1}Cl_3$. Based on the vacancy-mediated mobile ion diffusion, this class of materials can be applicable in all solid-state metal batteries, for conducting different ions, for example, halide ions, such as chloride and alkali metal ions, such as, lithium, and sodium.

As discussed above, for the preferred example with A = $Cs^+$, B = $Sn^{2+}$, C = $In^{3+}$, and X = $Cl^-$, exemplary indium doped CSC compounds are $CsSn_{0.867}In_{0.133}Cl_3$, $CsSn_{0.85}In_{0.1}Cl_3$, and $CsSn_{0.9}In_{0.067}Cl_3$. Of these $CsSn_{0.9}In_{0.067}Cl_3$ is most preferred in view of its chloride ion conductivity and high width of its voltage window of 5.3 V, which is a crucial property for any electrolyte.

In view of chloride ion conductivity of $CsSn_{0.9}In_{0.067}Cl_3$, the chloride ion conduction propagates by a vacancy mechanism involving displacement of $Sn^{2+}$ and $In^{3+}$ ions which compensates for the structural distortion caused by chloride diffusion as explained above. Moreover, the material enables fast chloride ion hopping involving $Sn^{2+}/In^{3+}$ coordinated chloride diffusion rendering it optimal for room temperature CIBs.

The chloride ion conductivity of the doped perovskite compound $A_aB_bC_cX_x$ can be further improved by heat treatment. For this, the $A_aB_bC_cX_x$ may be heated at a temperature of 100 °C or more for at least 1 hour. Preferably the heat treatment is performed at a temperature of about 120 °C to 140 °C for 1 to 10 hours such as 2 hours or more under vacuum. Applying such heat treatment has a stabilizing effect on the lattice due to release of strain and grain boundary ordering of the material. A further result of heat treatment is a decreased humidity intake of the material when being brought into contact with moist air.

Typically, the herein-described solid ion conductors have chloride ion conductivities in the range of about $10^{-4}$ S/cm, that is of at least $1 \times 10^{-4}$ S/cm, preferably of at least $2 \times 10^{-4}$ S/cm, still more preferably of at least $3 \times 10^{-4}$ S/cm. Application of the above-described heat treatment for instance may increase the chloride ion conductivity of a material by about $0.1 \times 10^{-4}$ S/cm to about $0.9 \times 10^{-4}$ S/cm.

Compared to their chloride ion conductivity, the herein-described solid ion conductors exhibit low electronic conductivities, i.e., they act as electronic insulators within a chloride ion battery. In particular, the solid ion conductors according to the present invention exhibit electronic conductivities in the range of $1 \times 10^{-9}$ S/cm, thereby preventing electronic conduction through the electrolyte.

The width of the voltage window which can be applied to the solid ion conductors may be at least 3 V, preferably at least 4 V, and even more preferably at least 5 V. A wide voltage window of the electrolyte renders it suitable for use in combination with a wide variety of cathode and anode materials which was not yet achieved for CIBs.

In the following, a method for manufacturing a solid ion conductor will be described in detail. In general, the method for manufacturing a solid ion conductor according to the present invention comprises the steps of mixing in stoichiometric amounts of AX, a salt of B and X, and a salt of C and X to obtain a reactant mixture for the perovskite compound of the formula $A_aB_bC_cX_x$, wherein the cation C has a smaller radius than B in terms of ionic radii, and wherein $1 \leq a \leq 2$, $0.5 \leq b \leq 2$, $0 < c \leq 1$, and $2 \leq x \leq 8$, wherein A, B, C, and X are defined as above; ball milling the reactant mixture to obtain a powder; and die molding the powder to obtain the solid ion conductor.

In particular, the stoichiometric amounts of the halides of A, B, and C to be mixed depend on the targeted composition of the doped perovskite compound $A_aB_bC_cX_x$. In view of production of a specific crystal phase, i.e., the cubic phase of the doped perovskite compound, the purity of reactant halides may be high, for instance analytic grade.

Mixing may be performed by any suitable mixing method for powder materials such as using a commercial blender. Since the doped perovskite compound forms in the subsequent ball milling step in mechanochemical synthesis, the grade of mixing is crucial for bringing the reactants into close contact.

Prior to ball milling of the obtained mixture, said reactant mixture may preferably be dried to avoid incorporation of moisture into the targeted perovskite. Such drying step may preferably be performed at a temperature of 100 °C, more preferably at about 120 °C. Moreover, drying may be performed in air, vacuum, or under inert atmosphere. In view of removing any possible moisture drying is performed most preferably under vacuum.

The ball milling step to obtain a powder is a high energy mechanical milling step which is typically performed for 10 min or more and 5 hours or less in view of reacting the chlorides quantitatively. Preferably, the duration of milling is adjusted according to the material to be synthesized between 30 min or more and 3 hours or less and may even be as short as 30 min to 60 min. In this context, ball milling may be performed for instance in 30 min intervals with a pause of e.g., 10 min between each interval.

The ball milling step to obtain a powder is a high energy mechanical milling step which typically involves a ball to powder mass ratio of 10:1, 15:1 or 20:1.

The die molding step to obtain the solid ion conductor from the powder may be conducted at elevated pressure in order to achieve a compressed solid electrolyte suitable to be incorporated into an all solid-state battery. Typically, the pressure during die molding is adjusted to several MPa, such as 50 MPa, 100 MPa, or even 350 MPa.

The obtained solid ion conductor represents an essential part of an all solid-state metal battery which is described hereafter in detail. Generally, the all solid-state metal battery comprises a cathode active material; a solid electrolyte comprising the solid ion conductor as described above; and an anode material.

Starting from the solid ion conductor, the cathode active material composite powder may be spread evenly on the solid ion conductor pellet followed by pressing the solid electrolyte and the cathode composite together at elevated pressure to obtain a bilayer pellet. Increasing the pressure to above 100 MPa, for instance to above 300 MPa such as 360 MPa, causes percolation of the cathode and the solid electrolyte which is optimal for ensuring high chloride transport from the cathode to the chloride ion-conducting electrolyte.

Subsequently, the anode material is added to the side of the bilayer pellet opposite to the cathode and the resulting pellet is typically pressed again at 30 MPa, 50 MPa, or 70 MPa for example to stick the anode material to the bilayer pellet. Once again, the increased pressure ensures optimal contact between the solid electrolyte and the electrode, i.e., the anode. If the pressure is applied within a metallic die, it is important to avoid contact of both anode and cathode with the metallic walls of the die, since such contact would induce a short-circuit of the resulting battery.

In the all solid-state metal battery according to the present invention, the cathode active material is preferably a layered structure that can be a host of the ion of interest during the battery cycling, for example, transition metal halides, layered double hydroxides (LDH) of transition metal halides, transition metal oxyhalides, transition metal sulfides, or even alkali metal ion-containing transition metal oxides. As explained above, most of such materials are yet to be employed for commercial batteries, since they tend to be soluble in liquid electrolytes. The use of CAMs is mainly determined by their volume change during chloride extraction and incorporation during discharge and charge, since such volume changes are prone to cause deteriorated contact between the cathode and the electrolyte, thereby causing increased charge transfer resistance and decreased capacity during use of the battery. Exemplary CAMs suitable for use in the all solid-state metal battery follow any of formulas (IV) to (VIII): $MX_x$ (IV), $MOX_x$ (V), $M-X_xLDH$ (VI), $M_mS_s$ (VII), or $M'_{1+h}M_{1-h}X_2$ (VIII), wherein, M may be one or more of Fe, V, Co, Cu, Zn, W, Mo, Mn, Ni, or a combination thereof; while, M' can be one of Li, Na, or K; and X can be one or more of Cl, F, Br, or I; x is in the range of from 1 to 6 , m is in the range of from 1 to 5, s is in the range of from 1 to 8, and h is in the range of from 0.0 to 0.2, which are characterized by a layered structure or a low degree of volume expansion and contraction during chloride ion transfer.

Moreover, the cathode active material may include other components such as conductive carbon. For the functioning of the cathode active material, it is preferably mixed with solid ionic conductor and further may be mixed with conductive carbon, in order to be used in the all solid-state battery.

The anode material of the all solid-state metal battery can be chosen from available metals such as Li, Li-In composites, Na, K, Mg, Ca, or Zn. In some embodiments, the anode can be any layered structure such as graphite or other layered carbon structures. Since the anode is brought into contact with the solid electrolyte via pressure molding, the stiffness of the material determines the contacting area between the components of the battery, that is the chloride ion transport efficiency from the electrolyte to the anode. Thus, for instance soft metal anodes such as Li and Li-In ensure excellent contact, while stiff metal anodes such as Mg and Ca may have decreased contact area to the electrolyte. However, Mg and Ca on the other hand exhibit a stabilized interface composition between the anode and the electrolyte during several charge/discharge cycles of the resulting battery maintaining a high chloride ion conductivity and low electronic conductivity.

Examples

The present invention is further illustrated by the following Examples without, however, being limited thereto.

Materials and Synthesis

CSC and $CsSn_{0.9}In_{0.067}Cl_3$ (CSIC) were prepared by ball-milling stoichiometric amounts of CsCl (Emsure®, analytic grade, Merck), $InCl_3$ (99.999%, Alfa Aesar) and $SnCl_2$ (≥99.99%, Sigma Aldrich) powders. The milling was carried out in a $Si_3N_4$ ball mill jar at 600 rpm (Fritsch Pulverisette 6) with a ball to powder ratio of 20:1 for 3 hours in the case of CSC and 30 minutes for CSIC. All precursors were dried overnight in a vacuum oven at 120 °C to remove any possible moisture prior to the synthesis and were handled inside an argon-filled glovebox with both $O_2$ and $H_2O$ levels being < 0.1 ppm. Ball-milling procedures consisted of repetitions of a milling time of 30 minutes with a pause of 10 minutes between repetitions. Heat-treated samples of CSC (CSC-HT) and CSIC (CSIC-HT) were obtained by heat treatment at 140 °C for 2 hours in vacuum.

Cathode-electrolyte composite was prepared by ball-milling $WOCl_4$ (Aldrich) or $VCl_3$ (Alfa Aesar), Super C65 conductive carbon black (Timcal), and CSIC in the weight ratio 6:1:3 at 100 rpm for 1 hour. The ball to powder ratio chosen for the composite preparation was 10:1.

For cell preparations of anode/SE/cathode, 180 mg of CSIC powder was poured into a 13 mm diameter stainless steel (SS) die set and initially pressed at 50 MPa. Approximately 2 mg of cathode composite powder consisting of $VCl_3$, CSIC and SuperP carbon in the weight ratio 3:6:1 was spread uniformly on one side of the pellet. The solid electrolyte and the cathode composite were then pressed together at 360 MPa to form a bilayer pellet. Following this, a Li disc of 300 μm thickness and 7 mm diameter was added to the opposite side of the pellet and the pellet was pressed again at approximately 50 MPa to stick the lithium to the surface of the pellet. Care was taken to prevent lithium from touching the walls of the SS die set to avoid a short-circuit during pellet preparation due to spreading of lithium. The pellet was ejected from the die set following the trilayer pellet preparation. The Li foil|CSIC|$WOCl_4$ pellet was made similarly for the CV experiment. However, for the cycling experiment Li foil|CSIC|$WOCl_4$ cell was assembled with a similar methodology but with ASC AD cell (Sphere energy) with 8 mm diameter, in order to apply desired pressure during cycling. In this case, 80 mg solid electrolyte powder, 1.5 mg of the cathode composite and 3 mm diameter lithium foil, was used. The cell was cycled at an internal pressure of approximately 60 MPa.

For the preparation of the lithium indium alloy foil with a Li:In atomic ratio of less than 1, a lithium disc of 7 mm diameter punched out of a lithium foil which was pressed to a thickness of less than 100 μm was placed on top of an indium disc of 7 mm diameter and 125 μm thickness. The foils were pressed together at 240 MPa by placing them inside an LDPE plastic bag to avoid direct contact with the press. After this, a 7 mm disc was punched out of the Li-In alloy foil. Mg and Ca were used directly as a 10 mm Mg foil and a 10 mm Ca disc.

Methods

The crystal structures of CSC and CSIC were investigated by X-ray diffraction (XRD) using a Stadi P diffractometer (STOE & Cie) in transmission mode with Cu-Kα radiation (λ = 1.540562 Å).

X-ray photoelectron spectroscopy (XPS) measurements were collected at a PHI 5800 MultiTechnique ESCA System (Physical Electronics) using monochromatized Al Kα radiation (250 W, 13 kV), a detection angle of 45°, and a pass energy at the analyzer of 29.35 eV. After disassembly of the cells, the metal anodes were transferred to a glovebox under inert gas to the load lock of the XPS system. Spectra were acquired directly after sample transfer and after removal of the topmost surface layer by Ar$^+$ ion sputtering (5 minutes with 1 μA/5 kV, the sputter rate was ~1 nm/min under these conditions). The C 1s peak of adventitious carbon was used for binding energy (BE) calibration and set to 284.8 eV. Peak fitting of the spectra was done with CasaXPS, using Gaussian-Lorentzian peak shapes and the expected values for intensity ratios and spinorbit-splittings of the various peak doublets.

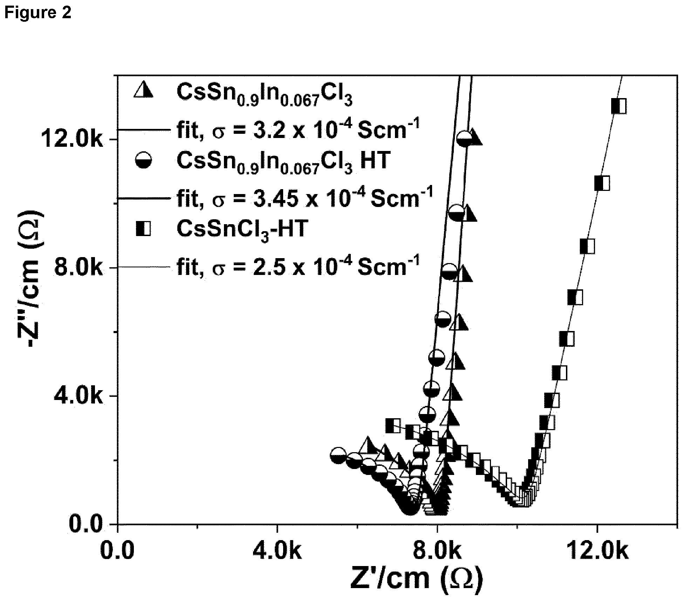

All electrochemical measurements were performed using a Biologic VMP3 potentiostat. For the electrochemical impedance spectroscopy (EIS) measurements, the electrolyte powder was sandwiched between two ion-blocking conductive carbon-coated aluminum discs (diameter 7 mm) and pressed inside a SS die set at a uniaxial pressure of ~510 MPa in order to obtain a pellets of 7 mm diameter. The impedance spectra were collected in a Swagelok-type cell in the temperature ranges from 25 °C to 60 °C. The pellets were heated to the required temperature and allowed to rest for a period of 60 minutes in order to attain steady state temperature prior to the measurement of the EIS spectrum. EIS of the SE pellets was carried out in the frequency range of 1 MHz to 1 Hz and full cells were recorded in the frequency range 1 MHz to 10 mHz at a sinusoidal amplitude of 10 mV. Pellet thicknesses for CSC-HT and CSIC were 0.068 mm and 0.074 mm, respectively. Pellet thicknesses for pristine, dry room exposed, and air exposed CSIC samples were 0.74 mm, 0.74 mm, and 0.8 mm and the corresponding values for the CSIC-HT samples were 0.72 mm, 0.69 mm, and 0.78 mm, respectively. The ionic conductivity was obtained from EIS by fitting the Nyquist plots using a resistor and two constant phase elements as shown in the inset of Figure 2.

For determining the electrochemical stability window of the SEs, bare CSIC pellets were placed between stainless steel current collectors and tested using linear sweep voltammetry (LSV) at a scan rate of 5 mV/s. An anodic scan of 0 to 5 V vs SS and a cathodic scan of 0 to -5 V vs SS were performed. Galvanostatic cycling of the ASSB with WOCl$_4$ as CAM was conducted in the voltage range 0.5 V to 3.9 V, while VCl$_3$ was cycled between 0.5 to 3.3 V at a current density of 0.1 mA/g (CAM). Cyclic voltammetry was performed in the potential range of 0.5 V to 3.9 V for WOCl$_4$ vs. Li/ Li$^+$, and VCl$_3$ was cycled between 0.6 and 2.5 V vs. Li/ Li$^+$, 0 to 2.0 V vs. Li-In, 0.1 to 1.7 V vs. Mg/Mg$^{2+}$, and 0.1 to 1.7 V vs. Ca/Ca$^{2+}$ at scan rates of 0.5 mV/s and 2.0 mV/s.

Example 1 - XRD structure of CSC, CSC-HT, and CSIC and storage stability

Figure 1 shows the XRD patterns of the as-prepared CSC, CSIC and CSC-HT samples at different storage times. The vividly yellow colored, perovskite cubic CSC (c-CSC) had a metastable phase and tended to transform to a stable monoclinic phase (m-CSC, white in color) during the rest periods even at inert conditions. CSIC possessed a similar yellow color and remained unaltered physically and structurally under argon atmosphere even after 6 months as confirmed by XRD. As observed in the XRD results, for different storage durations, the structure of c-CSC and CSC-HT changed to m-CSC phases, while CSIC retained its cubic structure for longer storage times.

Example 2 - chloride ion conductivity of CSC-HT, CSIC, and CSIC-HT

Ionic conductivities (σ) of the cubic CSC-HT, CSIC, and CSIC-HT samples were determined from the Nyquist plots at room temperature (Figure 2) and were found to be 2.5 × 10$^{-4}$ S/cm, 3.2 × 10$^{-4}$ S/cm, and 3.45 × 10$^{-4}$ S/cm, respectively. As can be seen, in addition to enhanced stability, the incorporation of In$^{3+}$ into the cubic CSC yielded improved chloride ion conductivity at RT even without heat treatment.

Example 3 - electrochemical performance of an all solid-state chloride ion battery of Li/CSIC/WOCl$_4$

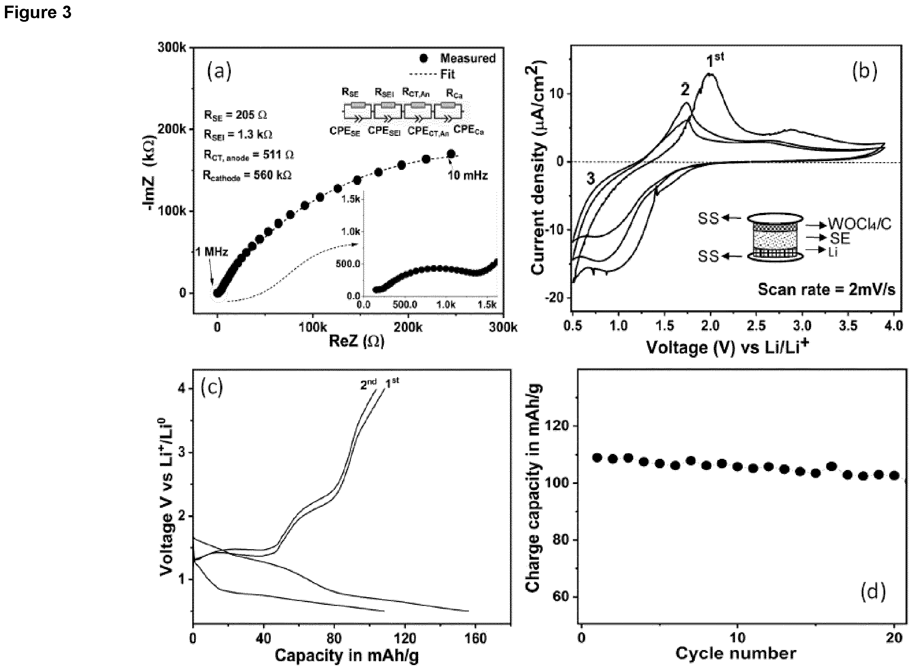

The Nyquist plot of the Li/CSIC/WOCl$_4$ cell (recorded 1 h after cell construction) as shown in Figure 3 was fitted with equivalent circuit model consisting of a series combination of four parallel R||CPE components (Figure 3a). The R||CPE component corresponding to the partial semicircle in the high frequency region (~1 MHz) was attributed to the transport of chloride ions through the SE, the one at ~2.5 kHz was assigned to a stable solid electrolyte interface (SEI) formed at the interface between the solid-electrolyte and the Li metal anode. However, the R||CPE component corresponding to the anode side charge transfer resistance at ~50 Hz was difficult to identify in the full cell since it was completely hidden by the disproportionately large semi-circle corresponding to the cathode side (560 kΩ).

To obtain insight in the involved redox reactions of the all-solid-state cell, cyclic voltammetry (CV) was carried out in the voltage range of 0.5 V to 3.9 V at RT, with a scan rate of 2 mV/s (Figure 3b). During the first cathodic scan, a reduction peak was observed between 1.5 and 0.5 V, followed by a pronounced oxidation peak at ~2.0 V and a second broader oxidation peak at around 2.8 V. In the subsequent cycles, the redox peaks underwent a slight negative shift accompanied by a reduction in peak currents. The decrement of the peak currents could be due to the irreversible charge-transfer between the electrodes or undesired chemical reactions between the SE and electrodes. That implies a possible increase in SE-electrode interphase resistances.

Galvanostatic cycling results of the WOCl$_4$ CAM (Figure 3c) displayed similar redox features as indicated by the CV. After the initial potential drop to 1.7 V from 2.5 V, a sloping region was observed between 1.6 and 0.8 V during the discharge. From 0.8 to 0.5 V, a further dechlorination process continued accounting for a first discharge capacity of 156 mAh/g corresponding to ~50 % of the theoretical capacity of WOCl$_4$ (313 mAh/g). The first charge curve featured two plateau regions, at around 2.7 V and 3.6 V. Overall, the first cycle yielded a reversible capacity of 108 mAh/g. WOCl$_4$ suffers moderate capacity fading over 20 cycles with ~100 mAh/g reversible capacity (Figure 3d). The capacity fading over the cycle number, could result from volume changes at the cathode/anode, which weakens the electrical contact between the CAM, SE, and conductive carbon, thus increasing the charge transfer resistance.

Example 4 - humidity tolerance of CSIC and CSIC-HT and regeneration to its cubic phase

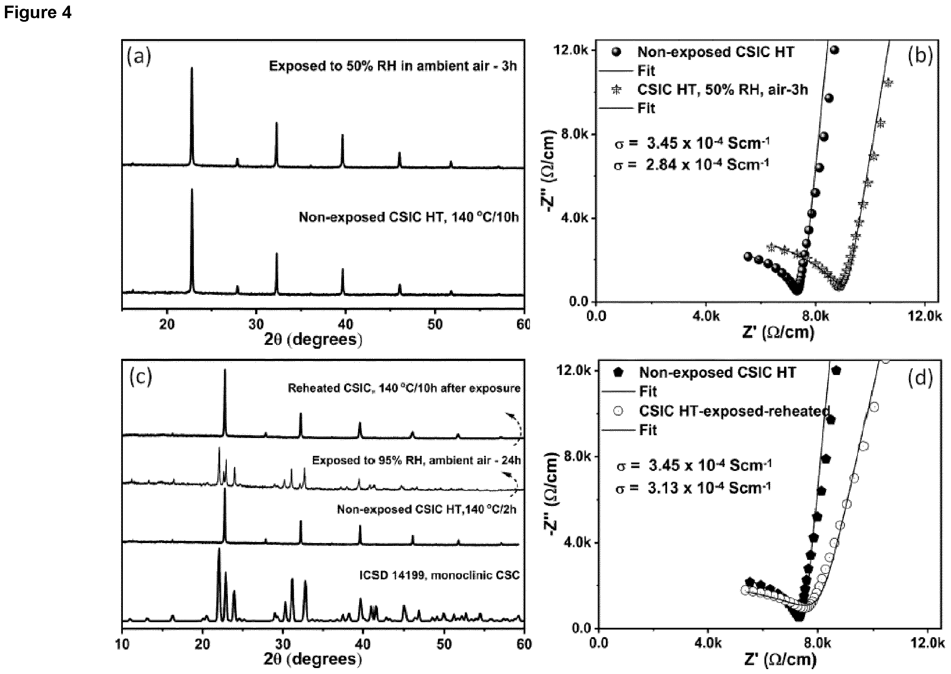

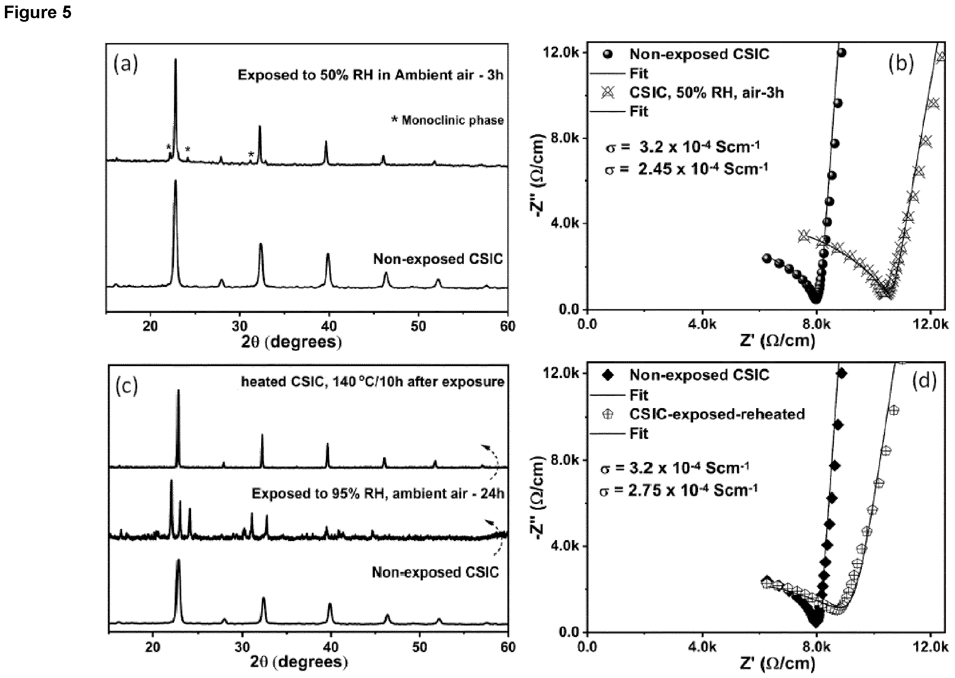

To evaluate the humidity tolerance of CSIC, two samples have been measured that are pristine CSIC and CSIC-HT. Both samples were exposed to ambient air having a RH level of 50 % for 3 h each. The X-ray diffractogram of CSIC-HT in 50 % RH conditions indicated no structural changes (Figure 4a) and a minute change in the ionic conductivities amounting to 2.84 $\times$ 10$^{-4}$ S/cm indicating no testimony of humidity intake in CSIC-HT (Figure 4b). This fact ascertains that even at very high RH level of 50 % it retains the intrinsic conducting cubic phase, which is a significant improvement compared to CSC being metastable even in inert atmosphere. The respective air exposure data of CSIC is provided in Figure 5a/b.

Moreover, both CSIC and CSIC-HT samples showed excellent structural regeneration abilities after a high-level humidity exposure to 95 % RH in ambient air. CSIC changed to the insulating pure monoclinic phase (1.25 $\times$ 10$^{-9}$ S/cm), while CSIC-HT transformed to a monoclinic-cubic mixed phase (7.11 $\times$ 10$^{-10}$ S/cm), both of which could be restored to pristine conductive phases upon a heat treatment of 140 °C for 10 h in air or vacuum (Figure 4c/d and 5c/d). As can be seen, heat treatment of CSIC achieved higher chloride ion conductivity connected to improved humidity tolerance. Moreover, both CSIC and CSIC-HT could be regenerated by simple heat treatment and recovered excellent chloride ion conductivity.

Example 5 - stability of CSIC against metal anodes of Li, Li-In, Mg, and Ca

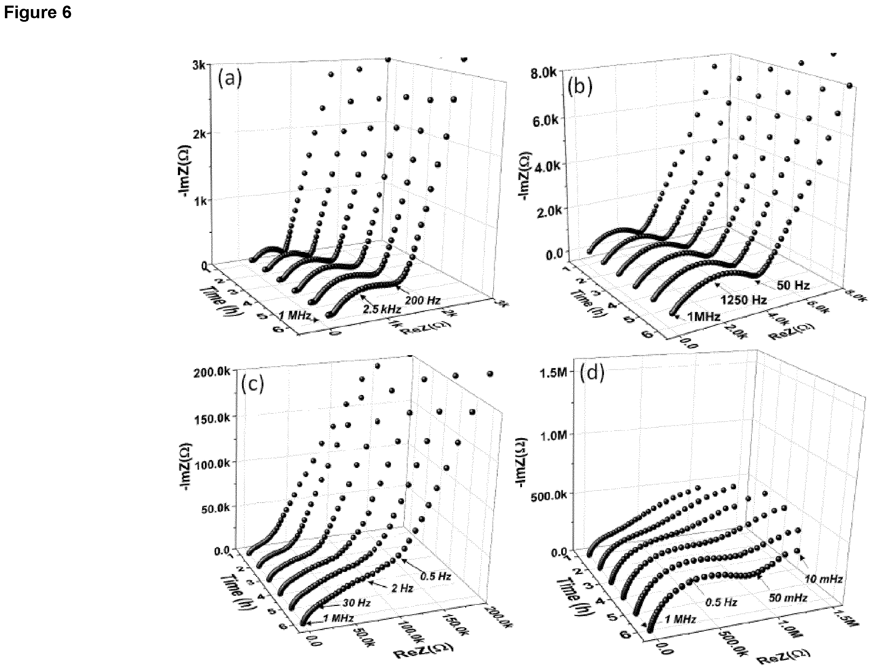

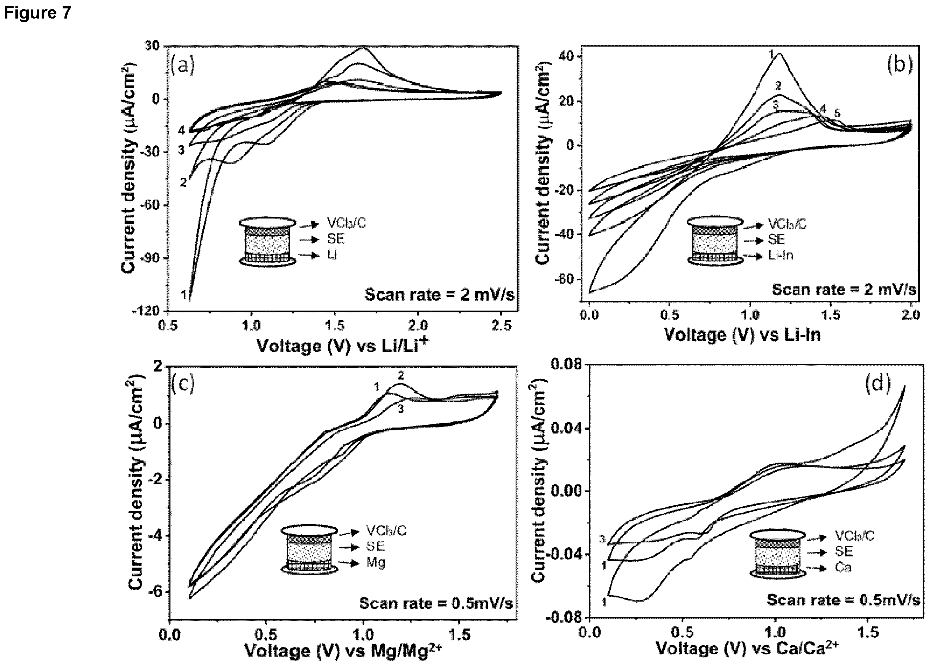

To assess the electro-/chemical stability of CSIC with metal anodes and its feasibility as a room temperature solid electrolyte, electrochemical experiments were conducted with VCl$_3$ as a second CAM and its electrochemical stability versus 4 different metal anodes, namely Li, Li-In, Mg, Ca, has been studied. Temporal evolution of full cell impedances (Figure 6) has been measured to understand the chemical stability of the anode metals with CSIC and CV experiments (Figure 7) have been carried out to demonstrate the ionic transfer between the solid interphases of electrodes and CSIC.

Lithium anode: Figure 6a shows the impedance spectra of a Li/CSIC/VCl$_3$ ASSB as a function of time. The analysis of these spectra revealed a high frequency semi-circle with a characteristic frequency of around 1 MHz which could be attributed to the solid-electrolyte impedance and a semi-circle with a characteristic frequency of 2.5 kHz associated with the anode side. The size of the second semi-circle grew from 580 $\Omega$ in the first hour to 1338 $\Omega$ in the sixth hour. First 5 CV cycles of the corresponding ASSB (Figure 7a) revealed redox regions in the voltage window of 0.6 to 2.5 V. During the cathodic scan (dechlorination), a single reduction peak was observed near 1.2 V which propagates as secondary wave towards 0.5 V. In the following anodic scan, two oxidation peaks were observed at 1.5 V and ~1.6 V. These redox features could be related to the interconversion of vanadium redox (V$^{3+}$/V$^{2+}$). It is important to note that second cycle onwards, the oxidation peak looked to be negatively shifted to 1.44 V and the peak currents were reduced which could be due to the chemical instability of cathode/anode with CSIC as well as volume changes. The cell performance could also be affected depending on the type of the formed interphase and its nature of ionic/electronic conductivity. If CSIC is reactive towards the metal anode, the new interphase could contain bi-products of Cs$^+$, Sn$^{2+}$, In$^{3+}$, and Cl$^-$ ions. The temporal increase of anodic impedance (Figure 6a) might be induced by a new SEI formation in the anode side. These aspects were further studied by XPS and will be discussed below.

Lithium-indium anode: Figure 6b shows the impedance spectra of a Li-In/CSIC/VCl$_3$ ASSB. The full cell showed a semi-circle with a characteristic frequency of around 1250 Hz which gradually increased from 2705 $\Omega$ in the first hour up to 4312 $\Omega$ in the sixth hour. The CV of the ASSB with a Li-In alloy anode is given in Figure 7b. The first reduction peak initiated at 0.7 V followed by a sharp anodic peak located at 1.18 V. The anodic peak shifted positively in later cycles to 1.5 V and decrease of the peak currents occurred which could be due to the overpotential from interfacial reaction products at either side of the electrodes.

Magnesium anode: Figure 6c shows the impedance spectra of a Mg/CSIC/VCl$_3$ ASSB. The full cell with a Mg anode exhibited two semi-circles in the mid-frequency region with characteristic frequencies of 30 Hz and 2 Hz that could be attributed to the anode side. Mg being a stiff metal cannot achieve a good contact with the SE, as in the case of softer Li metal and Li-In alloy. This could be a major contributor to the increased interfacial resistance, along with possible resistance contributions from interfaces between the electrodes and CSIC. The anode side resistance increased to over 150 kΩ in 6h. The CV (Figure 7c) showed distinct redox peaks with the cathodic peak being a decremental wave, while the anodic peak could be observed at 1.12 V. In the later cycles, redox features were stable, indicating a stabilized interphase formation in comparison to Li and Li-In anodes the composition of which were investigated by XPS shown below.

Calcium anode: The impedance of the Ca/CSIC/VCl$_3$ cell is shown in Figure 6d. It exhibited two semi-circular features in the lower middle and low-frequency regions. The circle in the lower mid-frequency region with a characteristic frequency of 0.5 Hz could be attributed to the SEI resistance and the partial semi-circle in the low-frequency region had a characteristic frequency below 10 mHz which could be attributed to the charge transfer impedance on the Ca anode side. The anode side impedance showed extremely high values of over 1 MΩ. The high interfacial anodic impedance was attributed to the stiffness of the Ca anode which results in contact issues with the solid electrolyte similar to the Mg anode. The CV of the corresponding cell is shown in Figure 7d. The distinct cathodic peak was located at ~0.63 V. The anodic peak was located at ~1.09 V, which is 0.5 V lower than for Li, mostly associated with high overpotential from the anode side. In the later cycles, the peaks seemed to be well resolved and reproduceable being indicative of a stabilized interphase composition which were investigated by XPS discussed below.

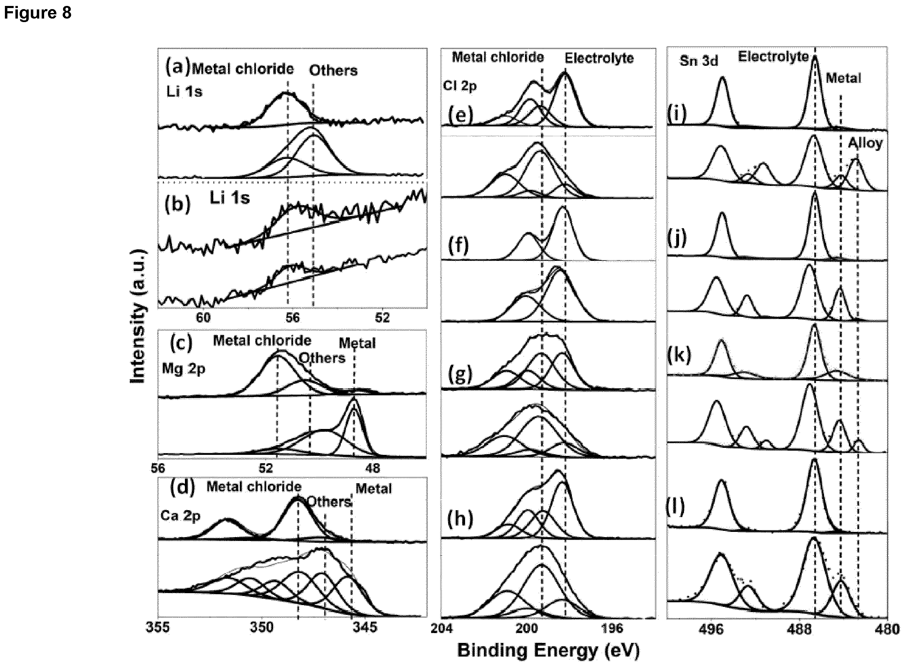

In the next step, the chemical species on the anode surface post cycling were subjected to XPS to determine the interfacial SEI products of the reaction with CSIC. The corresponding XPS detail spectra are depicted in Figure 8. In the Li 1s spectrum of the Li anode (Figure 8a), a single peak at 56.3 eV was detected which could be assigned to LiCl. After sputtering, a new peak emerged at lower binding energy (at 55.1 eV) that is most probably mainly caused by the presence of Li$_2$O in deeper layers. For the Li-In anode (Figure 8b), the Li 1s peak was relatively weak both before and after sputtering indicating a relatively thick layer of electrolyte residues and/or other deposits on the surface. The peak was detected at 55.9 eV and could be attributed to various Li species. Three peaks could be detected in the Mg 2p spectrum of the Mg anode (Figure 8c); the first one at the lowest BE (48.7 eV) could be assigned to metallic Mg, the last one at the highest BE (51.5 eV) to MgCl$_2$, and the feature in between (at ~50 to 50.5 eV) was due to other Mg salt species, e.g., oxides. While the peak of metallic Mg was rather small initially, it grew considerably after the sputter treatment indicating a rather thin deposit layer on the surface of the Mg anode. Conversely, the MgCl$_2$ intensity decreased significantly due to the sputter step. Finally, the Ca 2p spectrum of the Ca anode was dominated before sputtering by a peak doublet (at 348.1/351.5 eV) which could be assigned to CaCl$_2$. Another relatively small peak doublet due to CaO and other oxidized Ca species was also detected at slightly lower BE (347.1/350.5 eV). After sputtering, the intensity of the CaCl$_2$ peak doublet decreased, while the intensity of the CaO feature grew. In addition, a new peak doublet at even lower BE (345.8/349.3 eV) could be detected after sputtering which was due to metallic Ca.

For all four metal-SE surfaces, electrolyte components could also be detected by XPS. The spectra in the Cl 2p region (Figure 8e-h) showed in most cases two peak doublets which could be assigned to the electrolyte (Cl 2p$_{3/2}$ peak at 198.3 eV) and the respective metal chlorides (i.e., LiCl, MgCl$_2$ or CaCl$_2$; Cl 2p$_{3/2}$ peak at 199.2 to 199.4 eV). In the case of the Li-In electrode only the electrolyte signal was detected due to the relatively thick cover layer on the surface. For the other three electrodes (Li, Mg, and Ca), a reduction of the electrolyte signal and growth of the metal chloride signal was observed upon sputtering. In the spectra in the Sn 3d region (Figure 8i-l), small contributions from metallic Sn could be detected already for the unsputtered Li, Li-In, and Mg samples (peak doublet at 484.7/493.1 eV) besides the dominating peak doublet of the Sn$^{2+}$ ions of the electrolyte (486.7/485.1 eV). After sputtering, the signal of metallic Sn increased for all four metal anodes, while the formation of a new peak doublet at even lower BE (Sn 3d$_{5/2}$ peak at ~483 eV) indicated the formation of alloys with Li and Mg. Before sputtering, Cs was found in all cases in oxidized form (Cs$^+$) as expected from the electrolyte with a Cs 3d$_{5/2}$ peak binding energy of 724.3 eV (not shown). Interestingly, reduction of part of the Cs atoms to metallic state was observed in the measurements of the Li and Ca samples after sputtering (Cs 3d$_{5/2}$ peak at 725.9 eV). In$^{3+}$ remained in the original chemical state, when being in contact with Li, Li-In, or Ca (In 3d$_{5/2}$ peak at 445.3 eV), while a small additional signal of metallic (or alloyed) In was detected in the measurement of the Mg surface (In 3d$_{5/2}$ peak at 442.6 eV). After sputtering, except of Ca all three other metals witnessed a growth of the intensity of the feature of this metallic/alloyed In species (not shown).

In conclusion, the Ca surface was found to be less reactive towards Cs$^+$, Sn$^{2+}$, and In$^{3+}$ cations, while some Sn$^{2+}$ ions were reduced and Cs$^+$/In$^{3+}$ ions remained unchanged on the Li and Li-In surfaces. On the Mg surface, Cs$^+$ ions remained intact, while Sn$^{2+}$ and In$^{3+}$ ions partially reduced to metallic state. Thus, CSIC appears to be least reactive towards a Ca anode, while it forms metallic elements in combination with Li, Li-In, and Mg anodes, during repeated cycling of the ASSB.

**Claims**

1. A solid ion conductor for secondary all solid-state metal batteries, comprising a crystalline and doped perovskite compound of the formula $A_aB_bC_cX_x$, wherein

A is one or more first cation(s) selected from the group consisting of cations of Li, Na, K, Rb, and Cs;
B is a second cation selected from the group consisting of cations of Sn, Li, Pb, Sb, and Bi;
C is a cation having a smaller radius than the second cation B in terms of ionic radii and is selected from the group consisting of cations of In, Lu, Y, Mn, Fe, and Cu; and X is one or more anion(s) selected from the group consisting of anions of F, Cl, Br, and I;

wherein

$$1 \leq a \leq 2,$$

$$0.5 \leq b \leq 2,$$

$$0 < c \leq 1,$$

and

$$2 \leq x \leq 8.$$

2. The solid ion conductor according to claim 1, wherein the doped perovskite compound of the formula $A_aB_bC_cX_x$ has a cubic phase.

3. The solid ion conductor according to claim 1 or 2, wherein the doped perovskite compound of the formula $A_aB_bC_cX_x$ is a compound represented by $Cs_aSn_bC_cCl_3$, wherein C, a, b, and c are defined as above.

4. The solid ion conductor according to any one of claims 1 to 3, wherein the doped perovskite compound of the formula $A_aB_bC_cX_x$ is $CsSn_bIn_cCl_3$, wherein $0.8 \leq b < 1$ and $0 < c \leq 0.2$.

5. The solid ion conductor according to any one of claims 1 to 4, wherein the doped perovskite compound of the formula $A_aB_bC_cX_x$ is $CsSn_{0.9}In_{0.067}Cl_3$.

6. The solid ion conductor according to any one of claims 2 to 4, wherein the cubic phase of the doped perovskite compound of the formula $A_aB_bC_cX_x$ is stable under Ar atmosphere for at least 3 months and preferably in ambient air having a humidity level of up to 50 % RH for at least 3 h.

7. The solid ion conductor according to any one of claims 2 to 6, wherein the cubic phase of the doped perovskite compound is recoverable at a temperature of 100 °C or more in air or vacuum.

8. The solid ion conductor according to any one of claims 1 to 7, wherein the doped perovskite compound of the formula $A_aB_bC_cX_x$ is heat treated at a temperature of 100 °C or more.

9. A method for manufacturing a solid ion conductor according to any one of claims 1 to 8, comprising the steps of:

mixing in stoichiometric amounts one or more compound(s) AX, a salt of B and X, and a salt of C and X to obtain a reactant mixture, wherein

A is one or more first cation(s) selected from the group consisting of cations of Li, Na, K, Rb, and Cs;
B is a second cation selected from the group consisting of cations of Sn, Li, Pb, Sb, and Bi;
C is a cation having a smaller radius than the second cation B in terms of ionic radii and is selected from the group consisting of cations of In, Lu, Y, Mn, Fe, and Cu; and X is one or more anion(s) selected from the group consisting of anions of F, Cl, Br, and I;

ball milling the reactant mixture to obtain a powder; and

die molding the powder to obtain the solid ion conductor.

10. The method for manufacturing a solid ion conductor according to claim 9, wherein the reactant mixture is dried at a temperature of 100 °C or more, preferably under vacuum, before the ball milling step.

11. The method for manufacturing a solid ion conductor according to claim 9 or 10, wherein the ball milling step is performed for 10 min or more and 5 hours or less, preferably for 30 min or more and 3 hours or less.

12. The method for manufacturing a solid ion conductor according to any one of claims 9 to 11, wherein the die molding step is conducted at elevated pressure, preferably at at least 50 MPa.

13. An all solid-state metal battery, comprising:

a cathode active material;
a solid electrolyte comprising the solid ion conductor according to any one of claims 1 to 8; and
an anode material.

14. The all solid-state metal battery according to claim 13, wherein the cathode active material is selected from the group consisting of transition metal halides, layered double hydroxides of transition metal halides, transition metal oxyhalides, transition metal sulfides, and alkali metal ion-containing transition metal halides, preferably $VCl_3$ or $WOCl_4$, wherein the cathode active material is preferably **characterized by** a layered structure.

15. The all solid-state metal battery according to claim 13 or 14, wherein the anode material is selected from the group consisting of Li, Li-In, Mg, Ca, and layer structured materials.

Figure 1

**Figure 2**

**Figure 3**

EP 4 415 069 A1

Figure 4

EP 4 415 069 A1

**Figure 5**

EP 4 415 069 A1

Figure 6

Figure 7

**Figure 8**

Europäisches
Patentamt
European
Patent Office
Office européen
des brevets

## EUROPEAN SEARCH REPORT

Application Number

EP 23 15 6313

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 126133 A (SUZUKI MOTOR CORP; UNIV KYUSHU) 30 August 2022 (2022-08-30) * paragraphs [0014], [0017], [0029], [0032], [0033], [0040], [0041] * * claims 1, 2 * | 1-4,6,7, 9-15 | INV. H01M4/134 C01G19/00 H01M4/136 H01M4/38 H01M4/40 |
| X | CN 110 144 216 A (UNIV SHANGHAI TECH) 20 August 2019 (2019-08-20) * example 4 * * figure 6 * * paragraph [0044] * | 1-8 | H01M4/58 H01M10/052 H01M10/054 H01M10/0562 |

TECHNICAL FIELDS
SEARCHED      (IPC)

H01M
C01G

The present search report has been drawn up for all claims

| Place of search | Date of completion of the search | Examiner |
|---|---|---|
| Munich | 28 July 2023 | Gregori, Giuliano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 15 6313

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2023

| Patent document cited in search report | Publication date | Patent family member(s) | Publication date |
|---|---|---|---|
| JP 2022126133 A | 30-08-2022 | NONE | |
| CN 110144216 A | 20-08-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013214205 A1
- WO 2015057885 A1

**Non-patent literature cited in the description**

- **L. ZHOU et al.** *Nature Energy,* 2022, vol. 7, 83-93
- **G. ZHU et al.** *Nature,* 2021, vol. 596, 525-530
- **N. NUNOTANI et al.** *Am. Ceram. Soc.,* 2020, vol. 103, 297-303
- **F. GSCHWIND et al.** *ChemistryOpen,* 2016, vol. 5, 525-530
- **C. CHEN et al.** *Advanced Science,* 2019, vol. 6, 1802130
- **R. SAKAMOTO et al.** *ChemElectroChem,* 2021, vol. 8, 4441-4444
- **I. V. MURIN et al.** *Russian Journal of Electrochemistry,* 2009, vol. 45, 411-416
- **T. XIA et al.** *ACS Appl. Mater. Inter.,* 2020, vol. 12, 18634-18641